(19) Europäisches Patentamt
European Patent Office
Office européen des brevets

(11) **EP 2 102 678 B1**

(12) **EUROPÄISCHE PATENTSCHRIFT**

(45) Veröffentlichungstag und Bekanntmachung des Hinweises auf die Patenterteilung:
**09.01.2013 Patentblatt 2013/02**

(21) Anmeldenummer: **07821298.2**

(22) Anmeldetag: **15.10.2007**

(51) Int Cl.:
*G01S 13/93* (2006.01)     *G01S 7/40* (2006.01)

(86) Internationale Anmeldenummer:
**PCT/EP2007/060931**

(87) Internationale Veröffentlichungsnummer:
**WO 2008/071475 (19.06.2008 Gazette 2008/25)**

(54) **VERFAHREN ZUR ERKENNUNG EINER VERTIKALEN FEHLAUSRICHTUNG EINES RADARSENSORS**

METHOD FOR DETECTING A VERTICAL MISALIGNMENT OF A RADAR SENSOR

PROCÉDÉ D'IDENTIFICATION D'UNE ERREUR D'ALIGNEMENT VERTICAL D'UN RADAR DÉTECTEUR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **11.12.2006 DE 102006058305**

(43) Veröffentlichungstag der Anmeldung:
**23.09.2009 Patentblatt 2009/39**

(73) Patentinhaber: **Robert Bosch GmbH**
**70442 Stuttgart (DE)**

(72) Erfinder:
• HOETZER, Dieter
  Farmington Hills, Michigan 48331 (US)
• JORDAN, Ruediger
  70192 Stuttgart (DE)
• SCHWINDT, Oliver
  71277 Rutesheim (DE)

(56) Entgegenhaltungen:
EP-A- 1 239 299     DE-A1- 10 019 182
DE-A1- 19 707 590     US-A- 5 247 306
US-A1- 2002 189 875

**Beschreibung**

Die Erfindung betrifft ein Verfahren zur Erkennung einer vertikalen Fehlausrichtung der Strahlungscharakteristik eines Radarsensors insbesondere eines sogenannten Long-Range-Radarsystems eines Regelsystems für ein Kraftfahrzeug, insbesondere eines Abstands-, und/oder Fahrgeschwindigkeitsregelsystems mit den Merkmalen des Oberbegriffs des Anspruchs 1.

Gegenstand der vorliegenden Erfindung sind auch ein Computerprogramm und ein Computerprogrammprodukt, welche zur Durchführung des Verfahrens geeignet sind.

Stand der Technik

Verfahren und Vorrichtungen zur Dejustageerkennung sind seit Längerem bekannt, auch mit der Funktion, ihren Sensorsichtbereich selbst korrigieren zu können.

Ein gattungsgemäßes Verfahren zur Erkennung einer vertikalen Fehlausrichtung eines Regelsystems für ein Kraftfahrzeug ist aus der US 2002/189875 A1 bekannt geworden. Hierbei wird die Empfangsleistung der an einem Objekt reflektierten Radarstrahlung ermittelt und es werden die Abstandsabhängigkeit und die horizontale Winkelabhängigkeit kompensiert. Die funktionale Abhängigkeit der so verarbeiteten Empfangsleistung von dem Abstand von dem

Objekt wird mit einem gespeicherten Verlauf der Empfangsleistung über dem Abstand verglichen und daraus auf eine vertikale Fehlausrichtung der Strahlungscharakteristik eines Radarsensors geschlossen. Problematisch hierbei ist, dass die Schwelle, mit der die Empfangsleistung verglichen wird, konstant für den Verlauf der Empfangsleistung ist, wobei die Schwelle von der Reflektivität des Straßenbelags (ob dieser beispielsweise trocken oder nass ist) oder vom Rückstreuquerschnitt des Objekts abhängig ist. Für die Erkennung der Fehlausrichtung wird also die absolute Höhe der Empfangsleitung herangezogen. Dies führt zu Instabilitäten der Erkennung der Fehlausrichtung.

Aus der DE 100 19 182 A1 geht beispielsweise ein Verfahren und eine Vorrichtung zum Ermitteln einer Fehlausrichtung der Strahlungscharakteristik eines Sensors zur Geschwindigkeits- und Abstandsregelung eines Fahrzeugs hervor. Dieses Verfahren stellt eine Kombination zweier Einzelverfahren dar. Die beiden Einzelverfahren sind so gewählt, dass das eine Verfahren seine Vorteile in den Bereichen besitzt, in denen das andere Verfahren nachteilig funktioniert, sodass die Schwächen des einen Verfahrens durch die Stärken des anderen Verfahrens kompensiert werden können. Mithilfe dieser Kombination lässt sich mit großer Sicherheit entscheiden, ob eine Dejustage vorliegt, die mit geeigneten Nachführmaßnahmen beseitigt werden kann, oder eine so extreme Dejustage vorliegt, dass das System abgeschaltet werden muss.

Das aus dieser Offenlegungsschrift hervorgehende Verfahren ist nur dann auch für eine vertikale Dejustageerkennung und/oder Korrektur geeignet, wenn der Radarsensor den Elevationswinkel der reflektierenden Objekte zu messen gestattet. Radarsensoren mit dieser zusätzlichen Funktion sind aufwendig und werden in Fahrzeugen nur selten eingesetzt.

In Fahrzeugen werden fast ausschließlich Radarsensoren eingesetzt, die nur bedingt über die Möglichkeit verfügen, eine Dejustage zwischen der Achse des Radarsensors und der Fahrzeugachse/Fahrachse zu erkennen. Die horizontale Dejustagekompensation kann hierbei beispielsweise über eine Trajektorienverfolgung von stehenden Objekten bestimmt und kompensiert werden. Für eine vertikale Dejustage ist dies nicht möglich, weil derartige Radarsensoren in vertikaler Richtung keinen Winkel messen und deshalb auch keine Dejustage aus einer Trajektorienbetrachtung erkannt werden kann.

Eine vertikale Dejustage kann zu falschen horizontalen Winkeln führen, da das verwendete Antennendiagramm im Schnitt im Wesentlichen bei 0° vertikaler Dejustage entspricht. Wenn der vertikale Dejustagewinkel von 0° verschieden ist, weicht das Antennendiagramm stark von dem idealen verwendeten Antennendiagramm ab und ist insoweit nur noch begrenzt gültig.

Aus der DE 197 07 590 A1 sind ein Verfahren und eine Vorrichtung zur Justierung eines Entfernungssensors, insbesondere eines Abstandsradars für ein Kraftfahrzeug bekannt geworden, bei denen der Entfernungssensor mittels einer an sich bekannten Vorrichtung zur Positionierung, insbesondere mittels eines Scheinwerfer-Einstellgeräts positioniert wird. Hierzu werden Mess- oder Datenwerte des Entfernungssensors ausgelesen und anhand mindestens eines vorgegebenen Kriteriums so ausgewertet, dass mittels einer Serviceeinheit erforderliche Verstellrichtungen des Entfernungssensors anzeigbar sind. Dieses Verfahren und die Vorrichtung ermöglichen es nicht, Fehlausrichtungen auszugleichen, die beispielsweise während des Betriebs des Fahrzeugs entstehen, wie Beschädigungen, beispielsweise einer Stoßstange, in der der Radarsensor verbaut ist, oder bei einer erhöhten Anhängelast, welche zu einer Fehlausrichtung des Radarsensors führen.

Solche Fehlausrichtungen haben zur Folge, dass die Reichweite des Sensors abnimmt. Auf diese Weise lassen sich beispielsweise Fahrzeuge, die vor dem mit dem Sensor ausgestatteten Fahrzeug herfahren, nur noch bis zu einer begrenzten Reichweite detektieren. Im Falle eines Abstandsregelsystems wird das vorausfahrende Fahrzeug so bei Annäherung mit einer hohen Relativgeschwindigkeit zu spät erkannt, sodass das Eigenfahrzeug, das heißt, das mit dem Sensor ausgestattete Fahrzeug nicht mehr ausreichend stark verzögert werden kann und so Auffahrgefahr besteht, falls der Fahrer des Eigenfahrzeugs nicht mehr rechtzeitig eingreift. Darüber hinaus besteht auch die Gefahr, dass durch die Dejustage Brücken oder Schilderbrücken fälschlicherweise als Hindernisse klassifiziert werden und so beispielsweise ein abruptes Abbremsen des Fahrzeugs stattfindet, obgleich vor dem Fahrzeug kein Hindernis existiert.

Ein Radarsensor, der auch in Kraftfahrzeugen einsetzbar ist, geht ferner aus der EP 1239 299 A2 hervor.

Offenbarung der Erfindung

Vorteile der Erfindung

Durch das erfindungsgemäße Verfahren mit den Merkmalen des unabhängigen Anspruchs 1 ist es demgegenüber möglich, auch mit einem nicht vertikale Winkel messenden Radarsensor eine vertikale Dejustage insbesondere auch während des Betriebs des Fahrzeugs sicher zu erkennen und zu kompensieren.

Das erfindungsgemäße Verfahren sieht vor, die von Objekten empfangene Radar-Leistung über dem Abstand zu ermitteln, zu speichern und mit einer erwarteten Radar-Leistung, die einem justierten Sensor zuzuordnen ist, zu vergleichen und hieraus auf die vertikale Dejustage zu schließen.

Das Verfahren macht sich dabei zunutze, dass die Antennencharakteristik die höchste Empfindlichkeit auf der Mittelachse aufweist. Je größer die Abweichung von der Mittelachse ist, umso niedriger wird die empfangene Leistung eines Objekts. Wenngleich auch aus der gemessenen Leistung keine Dejustage ermittelt werden kann, da der Rückstreuquerschnitt des Objektes unbekannt ist, zeigt die über dem Abstand aufgetragene empfangene Leistung einen charakteristischen Verlauf, der ausgewertet werden kann.

Dabei wird die vertikale Fehlausrichtung dadurch bestimmt, dass bei einer Abweichung der ermittelten Empfangsleistung von der gespeicherten Empfangsleistung der Gradient der ermittelten Empfangsleistung über dem Abstand von dem Objekt ermittelt wird und hieraus der

Betrag der vertikalen Fehlausrichtung bestimmt wird. Mit der Bestimmung des Gradienten ist die absolute Höhe des Empfangswertes nicht mehr relevant, wodurch die Detektion stabiler ist als bei den im Stand der Technik bekannten Verfahren, beispielsweise bei dem aus der US 2002/189875 A1 bekannten Verfahren.

Durch die in den abhängigen Ansprüchen aufgeführten Maßnahmen sind vorteilhafte Weiterbildungen und Verbesserungen des in dem unabhängigen Anspruch angegebenen Verfahrens möglich.

So wird bevorzugt der Vergleich nur dann vorgenommen, wenn sich das Fahrzeug nicht auf einer Steigung bewegt. Es muss nämlich ausgeschlossen werden, dass sowohl das (beobachtende) Fahrzeug (Eigenfahrzeug) als auch das beobachtete Fahrzeug sich auf einer Steigung befinden, was erst ermittelt werden kann, nachdem das Eigenfahrzeug die Stelle passiert hat.

Das Vorhandensein einer Steigung kann auf vorteilhafte Weise aufgrund der Eigenbeschleunigung und der Längsbeschleunigung des Kraftfahrzeugs bestimmt werden, die für an sich bekannte Fahrdynamiksysteme ohnehin kontinuierlich erfasst werden.

Als Objekt werden vorteilhafterweise sich bewegende Objekte, beispielsweise sich nähernde oder entfernende Fahrzeuge gewählt, da die vertikale Position von Standzielen im Allgemeinen unbekannt ist. So haben beispielsweise Pfosten, Brücken oder Kanaldeckel völlig unterschiedliche vertikale Positionen. Dies ist bei Fahrzeugen nicht der Fall, bei denen von einem Reflexionsschwerpunkt von etwa 0,5m bis 1m über der Fahrbahn ausgegangen werden kann.

Kurze Beschreibung der Zeichnungen

Ausführungsbeispiele der Erfindung sind in den Zeichnungen dargestellt und in der nachfolgenden Beschreibung näher erläutert.

Es zeigen:

Fig. 1a    schematisch ein hinter einem Fahrzeug herfahrendes Fahrzeug mit justiertem Radarsensor;

Fig. 1b    die gemessene Empfangsleistung über dem Abstand von dem vorausfahrenden Fahrzeug bei der in Fig. 1 dargestellten Situation;

Fig. 2a    ein hinter einem Fahrzeug herfahrendes Fahrzeug mit dejustiertem Radarsensor;

Fig. 2b    die gemessene Empfangsleistung über dem Abstand von dem vorausfahrenden Fahrzeug bei der in Fig. 2a dargestellten Situation;

Fig. 3    die Strahlcharakteristik eines Radarsensors, der an einem hinter einem Fahrzeug herfahrenden Fahrzeug angeordnet ist, bei Überfahren einer Kuppe.

Ausführungsformen der Erfindung

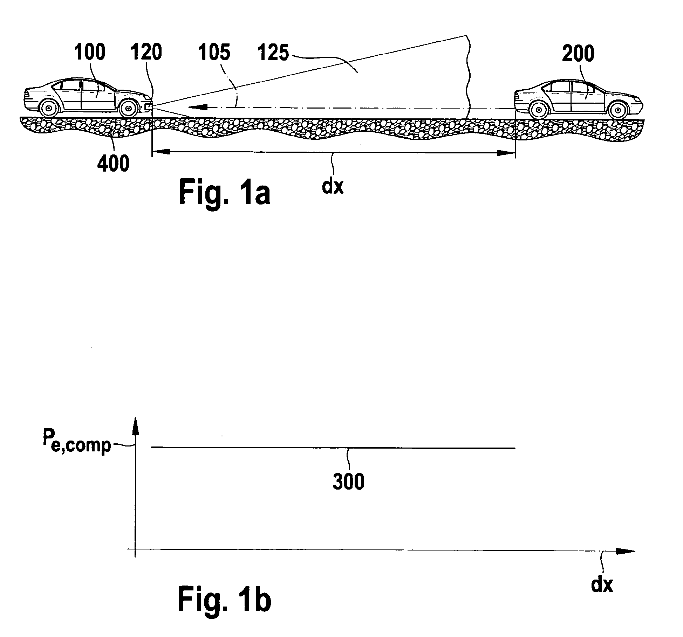

In Fig.1, 2 und 3 werden gleiche Elemente mit den gleichen Bezugzeichen bezeichnet. In Fig. 1 ist schematisch ein Fahrzeug 100 dargestellt, welches einen justierten Radarsensor 120 trägt. Dieser Radarsensor 120 weist einen sektorförmigen Sensorsichtbereich 125 auf, der mit der Mittelachse 105 des Fahrzeugs ausgerichtet ist. Bei ebener Fahrbahn 400 kann so ein vor dem Fahrzeug 100 herfahrendes Fahrzeug 200 erkannt werden durch Erfassen und Auswerten der an dem Fahrzeug 200 reflektierenden Radarstrahlung. In Fig. 1b ist die Empfangsleistung $P_{e,comp}$ über dem Abstand dx von dem vorausfahrenden Fahrzeug 200 dargestellt, nachdem die Abstandsabhängigkeit und die Abhängigkeit vom horizontalen Winkel kompensiert wurden.

Die Antennencharakteristik zeigt die höchste Empfindlichkeit auf der Mittelachse 105. Je größer die Abweichung von der Mittelachse 105 ist, um so niedriger wird die empfangene Leistung eines Objekts, beispielsweise des vor dem Fahrzeug 100 herfahrenden Fahrzeugs 200. Obwohl aus der gemessenen Leistung keine Dejustage ermittelt werden kann, da der Rückstreuquerschnitt des Fahrzeugs 200 unbekannt ist, ergibt sich aus der Abstandsabhängigkeit der Empfangsleistung ein charakteristischer Verlauf, der auf die nachfolgend beschriebene Weise eine vertikale Dejustage zu bestimmen ermöglicht.

Der Abstand eines Objekts, beispielsweise des vorausfahrenden Fahrzeugs 200, von dem Radarsensor 120 wird direkt gemessen.

Die Empfangsleistung ist proportional zum Kehrwert der vierten Potenz des Abstands dx. In horizontaler Richtung weist ein sogenannter Long-Range-Radarsensor im Allgemeinen mehrere, beispielsweise vier nebeneinanderliegende Antennenpatches auf. Aus dem Verhältnis der vier empfangenen Amplitudenphasenlagen kann der horizontale Winkel des Radar-Reflektors bestimmt werden. Da der Antennengewinn in horizontaler Richtung G ( ) bekannt ist, kann auch dieser Leistungsabfall berücksichtigt werden. Entsprechend der Radargleichung ergibt sich für die kompensierte Empfangsleistung in dB:

$$P_{e,comp} = P_e - 20\log(G(\ )) + 40\log(dx) + C,$$

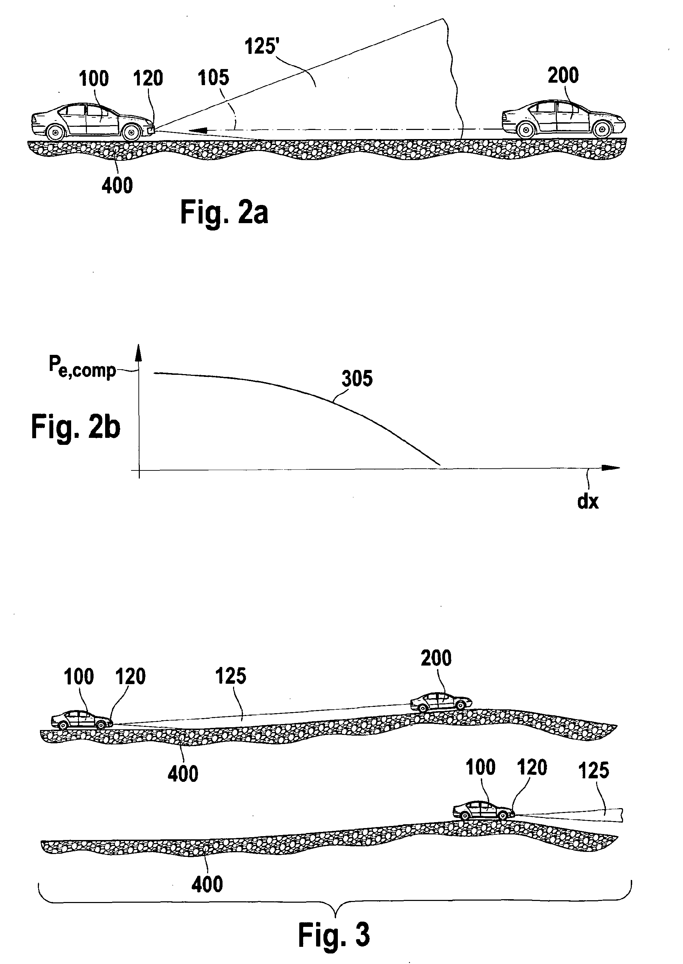

wobei C eine Konstante ist, die vom Rückstreuquerschnitt des Objektes 200 und verschiedenen Antennen- bzw. Naturkonstanten abhängt. Diese Konstante kann unbestimmt bleiben, da nur die Form des Verlaufs der kompensierten Empfangsleistung ausgewertet werden muss. Diese ist schematisch in Fig. 1 durch die Linie 300 dargestellt. Wie aus Fig. 1b hervorgeht, ändert sich die kompensierte Empfangsleistung bei einem justierten Sensor über dem Abstand nicht. Anders verhält es sich bei einem dejustierten Radarsensor 120, dessen Sensor sich beispielsweise aufgrund einer hohen Anhängelast oder aufgrund einer durch eine Beschädigung der Aufnahme des Sensors oder dergleichen hervorgerufenen Dejustage von der Fahrzeuglängsachse 105 nach oben geneigt verläuft. Der Sensorsichtbereich ist in Fig. 2a schematisch durch das Bezugszeichen 125' bezeichnet. In diesem Falle zeigt die kompensierte Empfangsleistung $P_{e,comp}$ einen Verlauf 305, der mit zunehmendem Abstand dx abfällt.

Aufgrund dieses Gradienten kann auf die vertikale Fehlausrichtung geschlossen werden und aufgrund der Größe des Gradienten kann der Winkel der Fehlausrichtung bestimmt werden.

In Fig. 3 ist schematisch die Situation dargestellt, in der beide Fahrzeuge 100, 200 eine Kuppe überfahren, da die Fahrbahn 400 eine Steigung aufweist. Um das Höhenproblem zu kompensieren, ist es erforderlich, die Daten so lange zu speichern, bis das Fahrzeug 100 diese Stelle passiert hat und die Steigung bekannt ist. Erst dann kann eine Auswertung der Daten erfolgen.

Die Steigung kann auch aufgrund der Eigenbeschleunigung und der Längsbeschleunigung des Fahrzeugs 100 ermittelt werden. Die Eigenbeschleunigung und die Längsbeschleunigung werden durch Sensoren, die beispielsweise für Fahrzeugdynamikregelung, wie Stabilitätsprogramme und dergleichen erforderlich sind, ohnehin während des Betriebs des Fahrzeugs 100 bestimmt. Wie in Fig. 3 schematisch dargestellt ist, erlaubt die Situation, in der das vorausfahrende Fahrzeug 200 eine Kuppel passiert, keine Bestimmung der vertikalen Dejustage des Sensors 120, da die vertikale Dejustage im Falle eines aufgrund einer Steigung in einer anderen Höhenposition sich bewegenden vorausfahrenden Fahrzeugs 200 nicht von der vertikalen Fehlausrichtung des Sensors 120 unterschieden werden kann. Durch die Messung der Längsbeschleunigung sowie der Eigenbeschleunigung kann zuverlässig verhindert werden, dass Fehlaussagen getroffen werden.

Um den statistischen Einfluss zu minimieren, werden vorteilhafterweise die Daten von vielen Fahrzeugen während der Fahrt erfasst und gemittelt und erst aufgrund dieser gemittelten empfangenen und kompensierten Empfangsleistungen über dem Abstand Aussagen über die vertikale Dejustage des Sensors 120 getroffen.

Das vorstehend beschriebene Verfahren kann beispielsweise als Computerprogramm auf einem Rechengerät,

**EP 2 102 678 B1**

insbesondere einem Steuergerät einer Brennkraftmaschine implementiert werden und dort ablaufen. Der Programmcode kann auf einem maschinenlesbaren Träger gespeichert sein, den das Steuergerät lesen kann.

## Patentansprüche

1. Verfahren zur Erkennung einer vertikalen Fehlausrichtung der Strahlungscharakteristik eines Radarsensors (120) eines Regelsystems für ein Kraftfahrzeug (100), insbesondere eines Fahrgeschwindigkeits- und/oder adaptiven Fahrgeschwindigkeitssystems, mit folgenden Schritten:

   - es wird die Empfangsleistung der an einem Objekt (200) reflektierten Radarstrahlung ermittelt;
   - es werden die Abstandsabhängigkeit und die horizontale Winkelabhängigkeit gemäß der Radargleichung kompensiert;
   - die funktionale Abhängigkeit der so verarbeiteten Empfangsleistung von dem Abstand von dem Objekt (200) wird mit einem erwarteten und gespeicherten Verlauf der Empfangsleistung über dem Abstand verglichen und hieraus auf die vertikale Fehlausrichtung der Strahlungscharakteristik des Radarsensors (120) geschlossen, **dadurch gekennzeichnet, dass** bei einer Abweichung der ermittelten Empfangsleistung von der erwarteten Empfangsleistung der Gradient der ermittelten Empfangsleistung bestimmt wird und hieraus der Betrag der vertikalen Fehlausrichtung des Radarsensors (120) bestimmt wird.

2. Verfahren nach Anspruch 1, **dadurch gekennzeichnet, dass** das Objekt ein vor dem Fahrzeug herfahrendes weiteres Fahrzeug ist und dass der Vergleich nur dann vorgenommen wird, wenn sowohl das Fahrzeug als auch das vor dem Fahrzeug herfahrende Fahrzeug sich nicht auf einer Steigung bewegen.

3. Verfahren nach Anspruch 2, **dadurch gekennzeichnet, dass** das Vorhandensein einer Steigung aufgrund der Eigenbeschleunigung und der Längsbeschleunigung des Kraftfahrzeugs (100) bestimmt wird.

4. Verfahren nach einem der Ansprüche 1 bis 3, **dadurch gekennzeichnet, dass** als Objekt ein sich bewegendes Objekt, insbesondere ein sich näherndes oder entfernendes Fahrzeug (200) gewählt wird.

5. Verfahren nach einem der Ansprüche 1 bis 4, **dadurch gekennzeichnet, dass** die gespeicherte Empfangsleistung über dem Abstand der Mittelwert aus einer Mehrzahl von gemessenen Empfangsleistungen der an einem Objekt (200) reflektierten Radarstreuung mit gemäß der Radargleichung kompensierter Abstandsabhängigkeit und horizontaler Winkelabhängigkeit ist.

6. Computerprogramm, das alle Schritte eines Verfahrens nach einem der Ansprüche 1 bis 5 ausführt, wenn es auf einem Rechengerät, insbesondere dem Steuergerät einer Brennkraftmaschine abläuft.

7. Computerprogrammprodukt mit Programmcode, der auf einem maschinenlesbaren Träger gespeichert ist, zur Durchführung des Verfahrens nach einem der Ansprüche 1 bis 5, wenn das Programm auf einem Computer oder einem Steuergerät eines Fahrzeugs ausgeführt wird.

## Claims

1. Method for detecting a vertical misalignment of the radiation characteristic of a radar sensor (120) of a control system for a motor vehicle (100), in particular of a driving speed system and/or adaptive driving speed system, having the following steps:

   - the receive power of the radar radiation reflected at an object (200) is determined;
   - the distance dependence and the horizontal angle dependence are compensated in accordance with the radar equation; and
   - the functional dependence of the receive power thus processed on the distance from the object (200) is compared with an expected and stored characteristic of the receive power over the distance, and the vertical misalignment of the radiation characteristic of the radar sensor (120) is inferred therefrom, **characterized in that** given a deviation of the determined receive power from the expected receive power the gradient of the determined receive power is determined and the absolute value of the vertical misalignment of the radar sensor (120) is determined therefrom.

**2.** Method according to Claim 1, **characterized in that** the object is a further vehicle travelling in front of the vehicle, and **in that** the comparison is undertaken only when both the vehicle and the vehicle driving in front of the vehicle are not moving on an incline.

**3.** Method according to Claim 2, **characterized in that** the presence of an incline is determined on the basis of the actual acceleration and the longitudinal acceleration of the motor vehicle (100).

**4.** Method according to one of Claims 1 to 3, **characterized in that** a moving object, in particular an approaching or receding vehicle (200), is selected as object.

**5.** Method according to one of Claims 1 to 4, **characterized in that** the stored receive power over the distance is the mean value of a plurality of measured receive powers of the radar scatter reflected at an object (200) with distance dependence and horizontal angle dependence compensated in accordance with the radar equation.

**6.** Computer program which executes all the steps of a method according to one of Claims 1 to 5 when it runs on a computing unit, in particular the control unit of an internal combustion engine.

**7.** Computer program product with program code, which is stored on a machine-readable carrier, for carrying out the method according to one of Claims 1 to 5 when the program is executed on a computer or a control unit of a vehicle.

## Revendications

**1.** Procédé de détection d'un défaut d'orientation verticale de la caractéristique de rayonnement d'un détecteur radar (120) d'un système de régulation d'un véhicule automobile (100), en particulier d'un système de régulation de la vitesse de roulage et/ou d'un système de régulation adaptative de la vitesse de roulage, le procédé comportant les étapes suivantes :

la puissance de réception du rayonnement radar réfléchi par un objet (200) est déterminée,
la dépendance vis-à-vis de la distance et la dépendance vis-à-vis de l'angle horizontal est compensée selon l'équation radar,
la dépendance fonctionnelle de la puissance de réception ainsi traitée vis-à-vis de la distance de l'objet (200) est comparée à l'évolution attendue et conservée en mémoire de la puissance de réception en fonction de la distance et des conclusions concernant le défaut d'orientation verticale de la caractéristique de rayonnement du détecteur radar (120) en étant tirées,

**caractérisé en ce que**
lorsque la puissance de réception déterminée s'écarte de la puissance de réception attendue, le gradient de la puissance de réception déterminée est déterminé et le niveau du défaut d'orientation verticale du détecteur radar (120) en est déduit.

**2.** Procédé selon la revendication 1, **caractérisé en ce que** l'objet est un autre véhicule qui se déplace en avant du véhicule et **en ce que** la comparaison n'est réalisée que si tant le véhicule que le véhicule qui se déplace en avant du véhicule ne se déplacent pas en pente.

**3.** Procédé selon la revendication 2, **caractérisé en ce que** la présence d'une pente est déterminée à partir de l'accélération propre et de l'accélération longitudinale du véhicule automobile (100).

**4.** Procédé selon l'une des revendications 1 à 3, **caractérisé en ce que** l'objet sélectionné est un objet qui se déplace et en particulier un véhicule (200) qui s'approche ou qui s'éloigne.

**5.** Procédé selon l'une des revendications 1 à 4, **caractérisé en ce que** la puissance de réception conservée en mémoire est la valeur moyenne en fonction de la distance, obtenue à partir de plusieurs puissances de réception mesurées du rayonnement radar diffus réfléchi par un objet (200), la dépendance vis-à-vis de la distance et la dépendance vis-à-vis de l'angle horizontal étant compensées selon l'équation radar.

**6.** Programme informatique qui met en oeuvre toutes les étapes d'un procédé selon l'une des revendications 1 à 5 lorsqu'il est exécuté sur un appareil de calcul et en particulier sur l'appareil de commande d'un moteur à combustion interne.

7. Produit de programme informatique doté d'un code de programme conservé en mémoire sur un support lisible par machine et permettant de mettre en oeuvre le procédé selon l'une des revendications 1 à 5 lorsque le programme est exécuté sur un ordinateur ou un appareil de commande d'un véhicule.

**Fig. 1a**

dx

**Fig. 1b**

**Fig. 2a**

**Fig. 2b**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2002189875 A1
- DE 10019182 A1
- DE 19707590 A1
- EP 1239299 A2